Europäisches Patentamt

European Patent Office

Office européen des brevets

(19)

(11) Veröffentlichungsnummer: **0 251 051**
**B1**

(12) # EUROPÄISCHE PATENTSCHRIFT

(45) Veröffentlichungstag der Patentschrift:
**23.05.90**

(51) Int. Cl.⁵: **B65G 45/00**

(21) Anmeldenummer: **87108764.9**

(22) Anmeldetag: **19.06.87**

(54) Halterung an einem Förderbandabstreifer für einen mit Abstreiferelementen versehenen Träger.

(30) Priorität: **23.06.86 DE 3620960**

(43) Veröffentlichungstag der Anmeldung:
**07.01.88 Patentblatt 88/1**

(45) Bekanntmachung des Hinweises auf die Patenterteilung:
**23.05.90 Patentblatt 90/21**

(84) Benannte Vertragsstaaten:
**AT BE CH DE ES FR GB IT LI LU NL SE**

(56) Entgegenhaltungen:
**EP-A- 0 004 809**
**EP-A- 0 094 021**
**EP-A- 0 157 246**
**DE-A- 2 709 714**
**US-A- 4 633 999**

**AUFBEREITUNGS-TECHNIK, Band 23, Nr. 11,
November 1982, Seiten 631-643, Wiesbaden, DE; A.
RAPPEN: "Reinhaltung von Förderbandanlagen"**

(73) Patentinhaber: **Hosch Fördertechnik GmbH,
Königswall 16 - 18, D-4350 Recklinghausen(DE)**

(72) Erfinder: **Schwarze, Hans-Otto, Esseler Strasse 170,
D-4350 Recklinghausen(DE)**

(74) Vertreter: **Patentanwälte Wenzel & Kalkoff,
Flasskuhle 6 Postfach 2448, D-5810 Witten(DE)**

## Beschreibung

Die Erfindung betrifft eine Halterung an einem Förderbandabstreifer für einen mit Abstreiferelementen versehenen, quer zur Bandlaufrichtung angeordneten Träger, der aus je einer an dem Förderband-Grundkörper angebrachten Spindel auf jeder Seite des Förderbandes, aus mit Hilfe von Muttern auf jeder Spindel verstellbar befestigten Tragkörpern und aus je einem Befestigungsblock an jedem Tragkörper zur Halterung der beiden Trägerenden besteht (siehe z.B. "Reinhaltung von Förderbandanlagen", Aufbereitungstechnik, November 1982, Band 23, Wiesbaden, Deutschland).

Zur Reinigung der Förderseiten von Förderbändern unmittelbar nach der Abgabestelle des Förderbandes auf dessen Unterseite haben sich sogenannten Lamellenabstreifer bewährt, bei denen eine Reihe oder zwei Reihen ("Reinhaltung von Förderbandanlagen", Aufbereitungstechnik, November 1982, Band 23, Wiesbaden, Deutschland) von messerartigen Lamellen die Oberfläche des Förderbandes schabend reinigen, wobei aufgrund einer Ausweichmöglichkeit gegen die Wirkung einer Torsionsfeder ein Verschwenken der Abstreiferelemente möglich ist, so daß bei hartnäckigen Verunreinigungen oder an Fügestellen des Förderbandes weder die Abstreiferelemente noch das Band selbst beschädigt werden, sondern jedes Abstreiferelement kurzzeitig und wirksam ausweicht um unmittelbar nach der Störungsstelle wieder die schabende Reinigungstägigkeit aufzunehmen.

Die an einem Träger gehaltenen Abstreifelemente werden in unterschiedlicher Weise gegenüber dem Förderband-Grundkörper gehalten. Neben einer starren Befestigung an Spindeln, Tragkörpern und Befestigungsblöcken ist eine bewegliche Lagerung der Träger bekannt (Deutsche Offenlegungsschrift 2 709 714), bei der die Träger durch ein Parallelogramm und entsprechende Gegengewichte an Hebeln geführt sind. Statt der Gegengewichte kann auch einer Lagerung eine Torsionsfeder eingebaut sein.

Die Parallelogrammführung ist relativ aufwendig und erfordert bei Gegengewichten relativ viel Raum, der nicht immer zur Verfügung steht. Auch kann durch eine Ansammlung des abgestreiften Gutes auf den Gegengewichten oder auf den Trägern die ursprünglich vorgegebene Andrückkraft während des Betriebes so verstellt werden, daß der Abstreifer insgesamt nicht mehr seine optimale Wirkung entfaltet. Andererseits sind die starren Befestigungen nicht immer geeignet, da oftmals entweder mit erheblichem Verschleiß der Abstreiflamellen gerechnet werden muß, so daß eine häufige Verstellung erforderlich ist, oder die Bandunterseite hängt aufgrund von Zugschwankungen unterschiedlich stark durch, so daß eine entsprechende Variation des Anpreßdruckes vorhanden ist. Eine derartige Variation ist im allgemeinen unerwünscht.

Es ist demnach Aufgabe der Erfindung, eine Halterung der eingangs genannten Art so zu verbessern, daß in besonders einfacher Weise die Andrückkraft an unterschiedliche Belastungen insbesondere aus unterschiedlichen Breiten und damit Eigengewichten des Trägers angepaßt werden kann.

Zur Lösung dieser Aufgabe schlägt die Erfindung vor, daß zwischen jedem Tragkörper und jedem Befestigungsblock zwei Schwingen bzw. eine Schwinge und einLenker zur Bildung eines Parallelogramms angebracht sind und die einen Enden der Schwingen bzw. der Schwinge und des Lenkers an dem Tragkörper und die anderen Enden an dem Befestigungsblock verschwenkbar gelagert sind, daß wahlweise, eine, zwei, drei oder alle vier Lagerstellen als Torsionsfedern ausgebildet sind und daß zwischen einem an dem Tragkörper angebrachten Vorsprung und einer Schwinge eine Ausgangslage der unter Federlast aufwärts gedrückten Schwinge bestimmbar ist.

Die Erfindung nutzt den Vorteil, daß vier Lagerstellen vorhanden sind – zwei für jede Schwinge bzw. zwei für jeden Lenker –, von denen ausgewählt werden kann, welche als Torsionsfeder ausgebildet wird, um die Federcharakteristik auf das Betriebsgewicht des Trägers in der Praxis abzustimmen. Auf eine kurze Formel gebracht, kann nach der Anweisung verfahren werden, je länger und damit schwerer der Träger ist, desto mehr Torsionsfedern werden pro Parallelogrammführung eingebaut. In dieser Weise läßt sich mit ein und demselben Torsionsfedertyp eine Vielzahl von Trägergewichten und damit Bandbreiten erfassen, so daß ein hoher Grad an Standardisierung möglich ist.

In jedem Fall ist die Ausgangslage der unter Federlast aufwärts gedrückten Schwinge bestimmbar, und zwar vorzugsweise durch das Verstellen eines Schraubenbolzens zwischen dem Vorsprung und der Schwinge bzw. einer Schwinge.

Nachfolgend werden Ausführungsbeispiele der Erfindung, die in der Zeichnung dargestellt sind, näher erläutert; in der Zeichnung zeigen:

Figur 1 eine seitliche Ansicht einer Halterung gemäß der Erfindung mit einer Parallelführung für den Träger und mehreren Torsionsfedern;

Figur 2 eine Ansicht gemäß Figur 1 eines weiteren Ausführungsbeispiels mit einer Schwinge und einem Lenker für eine Halterung des Trägers in Parallelführung;

Figur 3 eine Seitenansicht auf einen Träger mit zwei Reihen von Abstreifelementen und einer Laschenbefestigung für die Füße und

Figur 4 eine Querschnittsansicht durch ein Trägerrohr mit einem eingesetzten Abstreifelement gemäß einer Weiterbildung der Erfindung.

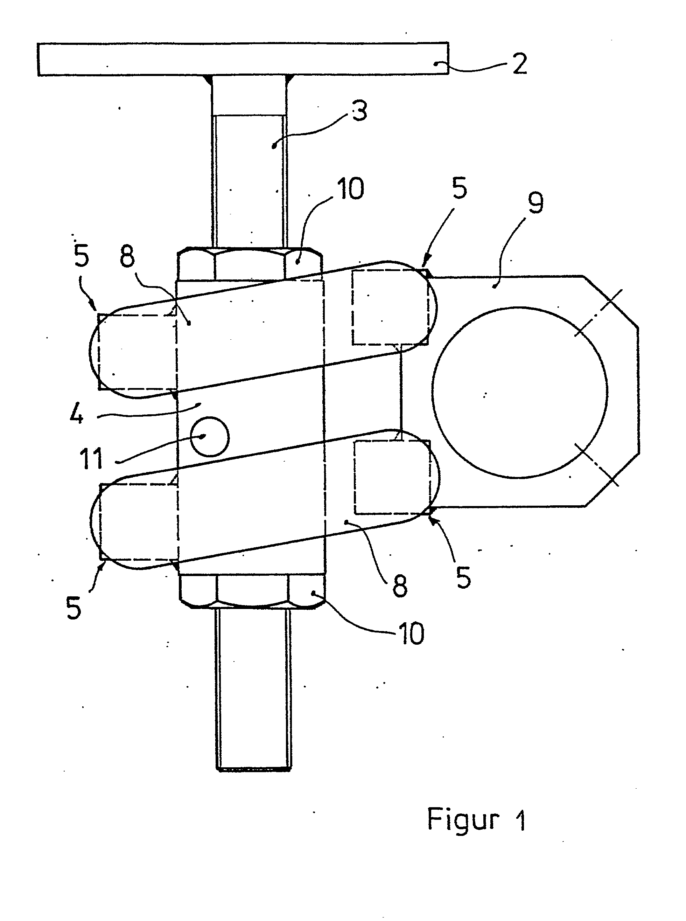

In der Figur 1 sind die wesentlichen Elemente einer Halterung gemäß der Erfindung für einen mit Abstreifelementen versehenen Träger an einem Förderband wiedergegeben. An dem Förderband-Grundkörper 1 ist über eine Platte eine Spindel 3 – wie angedeutet – angeschraubt oder angeschweißt, an der alle weiteren Elemente im Vergleich zum Förderband-Grundkörper 1 und damit zur Unterseite des zu reinigenden Förderbandes höhenverstellbar und feststellbar sind. Dazu gehört ein bei diesem Ausführungsbeispiel rohrartig ausgebildeter oder blockartig ausgebildeter, mit einer Durchgangsbohrung versehener Tragkörper 4, an den die äußeren Gehäuse zweier Torsionsfedern 5 angeschweißt sind. Zu jeder Torsionsfeder gehören als bewegliche Teile je eine Schwinge 8, an deren freien Enden sich wiederum Torsionsfedern 5 befinden, deren Gehäuse an je einem Befestigungsblock 9 angeschweißt sind. Es sind also insgesamt vier Torsionsfedern 5 pro Halterung auf jeder Seite des Förderbandes vorhanden, so daß sich eine entsprechende Federcharakteristik ergibt. Insgesamt entsteht also eine relativ harte Feder, die auf das hohe Eigengewicht des Trägers abgestimmt ist.

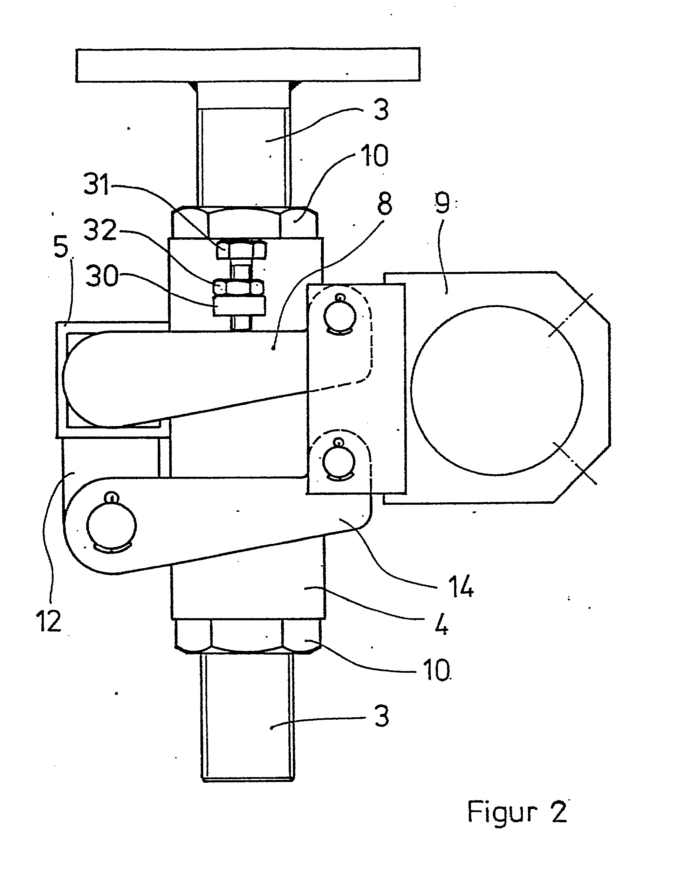

An dem Tragkörper 4 ist ein Zapfen 11 angebracht, der einmal als Anschlag gegen ein Durchfedern dienen kann, zum anderen jedoch als Verankerung für eine Einstellmöglichkeit einer Grundlast dienen kann, was im Zusammenhang mit der Figur 2 und einer entsprechenden Ausstattung noch näher erläutert wird.

Im übrigen ist der Befestigungsblock 9 infolge der beiden Schwingen an einem Parallelogramm geführt, so daß er im wesentlichen entlang einer mittleren Kreisbahn eine Kreisbewegung ausführt, jedoch seine Dreh-Lage zur Umgebung nicht ändert, also annähernd die Eigenschaften einer Parallelführung aufweist. Die damit erzielbaren Vorteile sind bekannt.

Bei dem Ausführungsbeispiel gemäß der Figur 2 sind zur Führung des Befestigungsblockes 9 auf jeder Seite der Halterung eine Schwinge 8 und ein Lenker 14 vorhanden, womit ausgedrückt werden soll, daß der Lenker 14 ein rein passives Glied ist, also keinen Beitrag zur Federwirkung liefert. Lediglich an der oberen Schwinge 8 ist eine einzige Torsionsfeder 5 angebracht, die sich wiederum an dem Tragkörper 4 abstützt. Von der Torsionsfeder reicht eine Lasche 12 abwärts, an der das eine Ende des Lenkers 14 drehbar gelagert ist.

Auch die freien Enden der Schwinge 8 und des Lenkers 14 sind frei drehbar an dem Befestigungsblock 9 gelagert, so daß insgesamt nur eine einzige Torsionsfeder 5 auf jeder Seite des Förderbandes vorhanden ist. Diese Ausführungsform eignet sich also insbesondere für einen leichten Träger, der klemmend in den Befestigungsblöcken 9 aufgenommen wird.

An dem Tragkörper 4 ist oberhalb der Schwinge 8 ein Vorsprung 30 in Form eines stumpf angeschweißten Flachstahles vorhanden, der eine Gewindebohrung trägt. Durch die Gewindebohrung ist ein Schraubenbolzen 31 eingeschraubt, der mit einer Kontermutter 32 gesichert ist. Das untere Ende des Schraubenbolzens 31 ragt aus dem Vorsprung 30 heraus und berührt die ihm zugewandte Seite der Schwinge 8. Mit Hilfe dieser Anordnung kann die Ausgangslage der unter Federlast aufwärts gedrückten Schwinge 8 bestimmt werden, und zwar durch entsprechendes Hinein- und Herausdrehen des Schraubenbolzens 31 mit nachfolgender Sicherung durch die Kontermutter 32. Damit kann der ganzen Anordnung eine Vorspannung gegeben werden. Das ist gleichbedeutend damit, daß erst dann eine Auslenkung des Befestigungsblockes 9 abwärts erfolgt, wenn eine bestimmte Kraft erreicht ist. Unterhalb dieser Kraft ist die Aufhängung in der Wirkung einer starren Aufhängung vergleichbar.

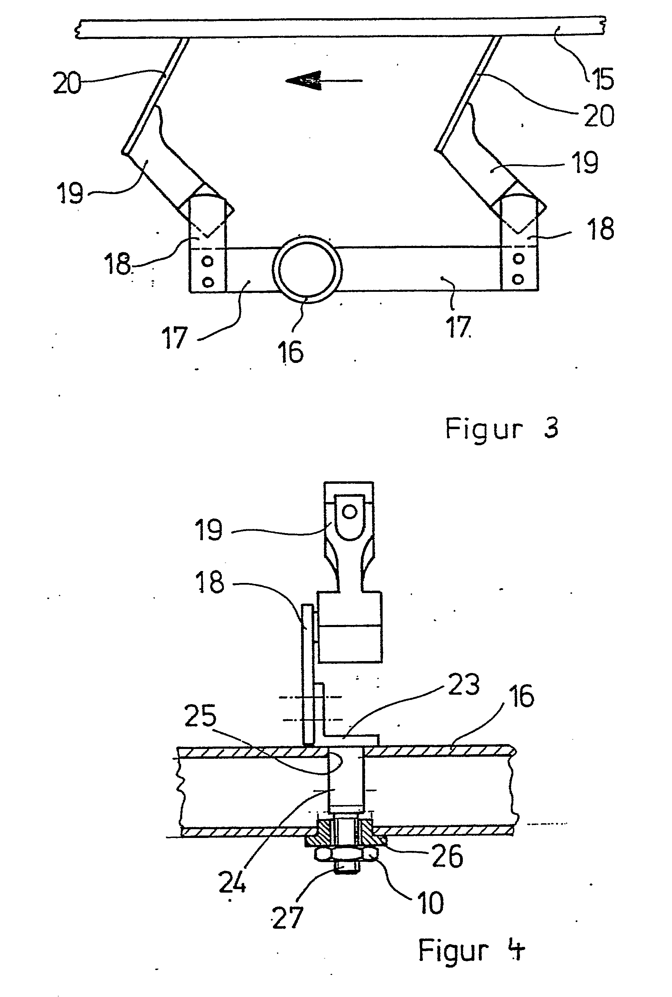

In den Figuren 3 und 4 sind Ausführungsbeispiele für die Bestückung des in den jeweiligen Befestigungsblöcken 9 gehaltenen Trägers wiedergegeben. Es wurde eingangs schon erwähnt, daß der Träger insbesondere als Rohr 16 ausgebildet ist, da er dann direkt in die Befestigungsblöcke einschiebbar, drehjustierbar und festklemmbar ist.

Bei dem in der Figur 3 dargestellten Ausführungsbeispiel sind annähernd parallel zu der Unterseite des Gurtbandes 15, dessen Laufrichtung mit einem Pfeil angedeutet ist, jeweils Laschen 17 angeschweißt, an denen Füße 18 der Abstreifelemente befestigt sind. Die angedeutete Befestigung mit Hilfe zweier Schrauben der Füße 18 an den Laschen 17 kann auch als Langlochverbindung ausgebildet sein, so daß eine Höhenverstellung jedes Fußes 18 gegenüber jeder Lasche 17 möglich ist.

Im übrigen besteht jedes Abstreiferelement neben einem Fuß 18 und einem Abstreifkörper 19 aus einer Abstreiflamelle 20, die an ihrer Spitze messerartig ausgebildet ist und die Unterseite des Gurtbandes 15 abstreift. Die Abstreiferlamellen 20 sind auswechselbar an dem Abstreifkörper 19 angebracht. Die Verbindung zwischen jedem Fuß 18 und dem Abstreifkörper 19 erfolgt wiederum durch eine Torsionsfeder. Die aus dem Abstreifkörper 19 und der Abstreiflamelle 20 gebildete Einheit kann also um den Mittelpunkt der Torsionsfeder ausgelenkt werden, was immer dann geschieht, wenn an dem Förderband 15 ein nicht lösbarer Fremdkörper die Lamellen 20 passiert. Diesbezüglich geht die Erfindung bekannte Wege.

Bei dem Ausführungsbeispiel gemäß der Figur 3 reicht das Rohr 16 von einer Halterung zu anderen, überspannt also die gesamte Breite des Förderbandes. Abweichend davon kann das Rohr auch durch zwei Rohrstummel ersetzt sein, die in den Befestigungsblöcken 9 gehalten sind, und zwischen zwei Riegeln, die den Laschen 17 vergleichbar sind, erstrecken sich dann zwei Rohre parallel zueinander über annähernd die gesamte Breite des Förderbandes, so daß zwei Rohre zur Verfügung stehen für die Befestigung der einzelnen Abstreiferelemente und nicht einzelne Laschen 17.

Die Befestigung der einzelnen Abstreiferelemente jeweils an einem der Rohre ist beispielhaft in der Figur 4 gezeigt. Innerhalb jedes Rohres 16 ist auf der Oberseite ein Vierkantloch 25 eingelassen, in das ein Vierkant 24 gerade hineinpaßt, der an der Unterseite eines Winkels 23 beispielsweise angeschweißt ist. An dem aufragenden Schenkel des Winkels 23 ist der laschenartige Fuß 18 des Abstreiferelementes angebracht. Die Anbringung erfolgt mit Hilfe von Schrauben, die wiederum infolge von Langlöchern höhenverstellbar sein kann.

Auf der gegenüberliegenden, unteren Seite des Rohres 16 ist eine größere kreisförmige Bohrung vorhanden, bis zu der der Vierkant 24 nicht ganz reicht. Vielmehr setzt sich der Vierkant in diesem Bereich als Schraubenbolzen 27 fort, über den ein Ring 26 zur Ausfüllung der Bohrung in dem Rohr 16 geworfen ist. Eine Mutter 10 gibt der gesamten Anordnung Halt.

Diese Art der Befestigung gestattet nach der Anfertigung der kreisförmigen Bohrung in dem Rohr 16 die Ausbildung des Vierkantloches 25 ohne Schwierigkeiten, andererseits ist die aus dem Winkel 23, dem Vierkant 24 und dem Schraubenbolzen 27 gebildete Einheit unverrückbar und unverdrehbar verankert.

Falls die Befestigung zwischen dem Fuß 18 und Winkel 23 starr ist, kann durch Unterlegen von Scheiben mit einem Vierkantloch zwischen dem Winkel 23 und der Rohroberseite eine entsprechende Höhenverstellung vorgesehen sein.

Das in der Figur 4 abgebildete Ausführungsbeispiel für die Halterung eines Abstreifelementes an einem Rohr 16 ist auf eine drehsichere Befestigung innerhalb des Rohres 16 angewiesen, da das Abstreifelement "auf einem Bein" steht. Selbstverständlich kann zu beiden Seiten des Abstreifkörpers 19 ein Fuß angeordnet sein, so daß durch eine Verankerung beider Füße zu beiden Seiten des Abstreifkörpers 19 eine drehfeste Verbindung mit dem Rohr 16 gelingt. Dabei können also die Befestigungselemente durchgehende, zylindrische Bolzen sein, die wiederum Möglichkeiten zur Höhenverstellbarkeit enthalten, beispielsweise durch eine Relativverstellung dieser Bolzen zu dem Rohr 16 oder durch eine Relativverstellung der Füße bzw. vergleichbare Elemente des Abstreifelementes gegenüber diesen Bolzen. Die Beschreibung der Erfindung ist unter dem Stichwort einer Halterung vorgenommen worden. Selbstverständlich beansprucht die Erfindung Schutz für einen mit dieser Halterung ausgestatteten Förderbandabstreifer, also für dasjenige Gerät, das als verkaufsfertige Einheit gehandelt wird.

Das in der Figur 1 dargestellte Ausführungsbeispiel kann noch insofern abgewandelt werden, als die Lenker 8 ebenfalls auf der dem Betrachter abgewandten Seite der Spindel 3 nochmals vorhanden sind, und zwar in derselben Stellung. Diese zusätzlichen Lenker können mit eigenen Torsionsfedern 5 versehen sein – diese Ausführungsform ist für extrem schwere Träger geeignet – oder die Kerne der Torsionsfedern 5 können durch die Gehäuse hindurchgeführt und die weiteren Lenker 8 aus Stabilitätsgründen an den freien Enden der durchgeführten Kerne befestigt sein. In diesem Fall ergibt sich jeweils ein geschlossener Rahmen, der aus zwei Schwingen gebildet ist und aus zwei Kernen der Torsionsfedern.

**Patentansprüche**

1. Halterung an einem Förderbandabstreifer für einen mit Abstreiferelementen (20) versehenen, quer zur Bandaufrichtung angeordneten Träger (16), bestehend aus je einer an dem Förderband-Grundkörper angebrachten Spindel (3) auf jeder Seite des Förderbandes (15), aus mit Hilfe von Muttern (10) auf jeder Spindel (3) verstellbar befestigten Tragkörpern (4) und aus je einem Befestigungsblock (9) an jedem Tragkörper (4) zur Halterung der beiden Trägerenden, dadurch gekennzeichnet, daß zwischen jedem Tragkörper (4) und jedem Befestigungsblock (9) zwei Schwingen (8), bzw. eine Schwinge (8) und ein Lenker (14) zur Bildung eines Parallelogramms angebracht sind und die einen Enden der Schwingen bzw. der Schwinge (8) und des Lenkers (14) an dem Tragkörper (4) und die anderen Enden an dem Befestigungsblock (9) verschwenkbar gelagert sind, daß wahlweise eine, zwei, drei oder alle vier Lagerstellen als Torsionsfedern (5) ausgebildet sind, und daß zwischen einem an dem Tragkörper (4) angebrachten Vorsprung (30) und einer Schwinge (8) eine Ausgangslage der unter Federlast aufwärts gedrückten Schwinge (8) bestimmbar ist.

2. Halterung nach Anspruch 1, bei der der Träger als Rohr ausgebildet ist, dadurch gekennzeichnet, daß das Rohr (16) mit Einstecklöchern (25) für den Fuß (18) eines Abstreiferelementes versehen ist, und daß jeder Fuß (18) gegenüber dem Rohr (16) höhenverstellbar befestigt ist.

3. Halterung nach Anspruch 2, dadurch gekennzeichnet, daß jedes Einsteckloch als Kantloch, insbesondere Vierkantloch (25) ausgebildet ist, und daß die Querschnittsform des Fußes (18) entsprechend ausgebildet ist.

4. Halterung nach Anspruch 2, dadurch gekennzeichnet, daß jedes Abstreifelement zwei Füße aufweist, und daß in dem Rohr zwei Einstecklöcher pro Abstreifelement vorgesehen sind.

5. Halterung nach einem der vorhergehenden Ansprüche, dadurch gekennzeichnet, daß jede Torsionsfeder in an sich bekannter Weise aus einem inneren Vierkantkern (7) und aus einer um 45° dazu verdreht angeordneten Vierkanthöhlung eines Gehäuses (6) besteht, und daß die im wesentlichen im Querschnitt dreieckförmigen Eckräume durch Gummiprofile ausgefüllt sind.

6. Halterung nach Anspruch 1 oder 3, dadurch gekennzeichnet, daß an jedem Tragkörper (4) zwei voneinander unabhängige Schwingen (8) und Befestigungsblöcke (9) zur Aufnahme zweier Träger (16) angebracht sind.

7. Halterung nach einem der Ansprüche 1, 2 oder 6, dadurch gekennzeichnet, daß an jedem Träger (16) zwei Reihen von Abstreifelementen angeordnet sind.

**Claims**

1. Retention device at a conveyor belt scraper for a supporting beam (16) provided with scraper elements (20) which is disposed at right angles to the running direction of the belt, consisting of a spindle (3) fitted on the baseplate of the conveyor belt on each side of the conveyor belt (15), of supporting elements (4) fixed adjustably on each spindle (3) by means of nuts (10), and of a fixing block (9) on each supporting element (4) for retaining the two supporting beam ends, characterized in that two rocker arms (8) or a rocker arm (8) and a steering arm (14) are fitted between each supporting element (4) and each fixing block (9) to form a parallelogram, and the one ends of the rocker arms or of the rocker arm (8) and of the steering arm (14) are swivellably mounted on the supporting element (4), while the other ends are swivellably mounted on the fixing block (9), in that, one, two, three or all four points of support according to choice are designed as torsion springs (5), and in that an initial position of the rocker arm (8) pressed upwards under spring load can be determinded between a projection (30) disposed on the supporting element (4) and a rocker arm (8).

2. Retention device according to Claim 1, in which the supporting beam is in the form of a pipe, characterized in that the pipe (16) is provided with insertion holes (25) for the foot (18) of a scraper element, and in that each foot (18) is fixed so that it is vertically adjustable relative to the pipe (16).

3. Retention device according to Claim 2, characterized in that each insertion hole is designed as an angular hole, in particular a hole (25), and in that the cross-sectional shape of the foot (18) is designed accordingly.

4. Retention device according to Claim 2, characterized in that each scraper element has two feet, and in that two insertion holes per scraper element are provided in the pipe.

5. Retention device according to one of the preceding claims, characterized in that each torsion spring comprises, in a manner known per se, an inner square core (7) and, arranged turned by 45° thereto, a square hollow of a housing (6) and in that the corner spaces, which are essentially triangular in cross section, are filled by rubber sections.

6. Retention device according to one of Claims 1 or 3, characterized in that two rocker arms (8) and fixing blocks (9) which are independent of each other are fitted on each supporting element (4) for the accommodation of two supporting beams (16).

7. Retention device according to one of the Claims 1, 2 or 6, characterized in that two rows of scraper elements are provided on each supporting beam (16).

## Revendications

1. Fixation d'un dispositif de nettoyage de bande convoyeuse pour un support (16) muni d'éléments de nettoyage (20) disposé transversalement à la direction de déplacement de la bande, consistant de chaque côté de la bande convoyeuse (15), en un arbre (3) monté sur la structure de base de la bande convoyeuse, en des corps de support (4) fixés de façon ajustable sur chaque arbre (3) au moyen d'écrous (10), et en un bloc de fixation (9) sur chaque corps de support (4) pour maintenir les deux extrémités du support, caractérisée par le fait qu'entre chaque corps de support (4) et chaque bloc de fixation (9), deux leviers basculants (8), ou respectivement un levier basculant (8) et un guide (14), sont disposés pour former un parallélogramme, et que les unes des extrémités des leviers basculants (8), ou respectivement du levier basculant (8) et du guide (14), sont montées pivotantes sur le corps de support (4), et que les autres extrémités sont montées pivotantes sur le bloc de fixation (9), qu'au choix, une, deux, trois ou toutes les quatre positions de pivot sont conformées en ressorts de torsion (5), et que, entre une saillie (30) disposée sur le corps de support (4) et l'un des bras basculants (8), une position de dégagement peut être déterminée pour le bras basculant (8) sollicité vers le haut par la force de ressort.

2. Fixation selon la revendication 1, où le support a la forme d'un tube, caractérisée par le fait que le tube (16) est pourvu de trous de réception (25) pour le pied (18) d'un élément de nettoyage, et que chaque pied (18) est ajustable en hauteur par rapport au tube (16).

3. Fixation selon la revendication 2, caractérisée par le fait que chaque trou de réception a une forme polygonale, notamment à quatre pans (25) et que le pied (18) présente une section de forme correspondante.

4. Fixation selon la revendication 2, caractérisée par le fait que chaque élément de nettoyage présente deux pieds et que dans le tube, sont prévus deux trous de réception par élément de nettoyage.

5. Fixation selon l'une des revendications précédentes, caractérisée par le fait que chaque ressort de torsion est constitué de façon connue en soi d'un noyau interne à quatre pans (7) et d'une cavité à quatre pans ménagée dans un boîtier (6) décalée de 45° par rapport au noyau, et que les volumes d'angle, de section essentiellement triangulaire, sont comblés par des profils en caoutchouc.

6. Fixation selon la revendication 1 ou la revendication 3, caractérisée par le fait que sur chaque corps de support (4), sont disposés deux leviers basculants (8) et des blocs de fixation (9), indépendants l'un de l'autre, pour recevoir deux supports (16).

7. Fixation selon l'une des revendications 1, 2 ou 6, caractérisée par le fait que sur chaque support (16), sont disposées deux rangées d'éléments de nettoyage.

Figur 1

Figur 2

Figur 3

Figur 4